# EUROPÄISCHE PATENTANMELDUNG

(11) **EP 2 312 130 A1**
(43) Veröffentlichungstag der Anmeldung: **20.04.2011**
(21) Anmeldenummer: 09012933.9
(22) Anmeldetag: 13.10.2009
(51) Int. Cl.: F01K 7/34

(54) **Anpassung der Vorwärmendtemperatur eines Kraftwerk-Sekundärkreislaufs mittels selektiver Aktivierung verschiedener Anzapf-Anschlüsse einer Dampfturbine**

(71) Anmelder: Siemens Aktiengesellschaft, 80333 München (DE)
(72) Erfinder: Birnbaum, Jürgen, 90419 Nürnberg (DE); Fichtner, Markus, 91639 Wolframs-Eschenbach (DE)

(57) **Zusammenfassung**

Es wird ein Turbinensystem für einen Sekundärkreislauf eines Kraftwerks beschrieben. Das Turbinensystem weist auf (a) eine Dampfturbine (262), welche mit einem Arbeitsmedium betreibbar ist und welche zumindest einen ersten Anzapf-Anschluss (272) und einen zweiten Anzapf-Anschluss (273), welche unterschiedlichen Energieniveaus des Arbeitsmediums zugeordnet sind, (b) ein Leitungssystem (270) mit einer ersten Abgabeleitung (272a) zum Transferieren des Arbeitsmediums von dem ersten Anzapf-Anschluss (272) zu einer Arbeitsmedium-Vorwärmvorrichtung (290) und einer zweiten Abgabeleitung (272a) zum Transferieren des Arbeitsmediums von dem zweiten Anzapf-Anschluss (274) zu der Arbeitsmedium-Vorwärmvorrichtung (290), und (c) eine Steuereinrichtung (295), mittels welcher abhängig von einer Rücklauftemperatur des Arbeitsmediums im Bereich der Arbeitsmedium-Vorwärmvorrichtung (290) ein Transfer des Arbeitsmediums über die erste Abgabeleitung (272a) und/oder die zweite Abgabeleitung (274a) aktivierbar ist. Es wird ferner ein Sekundärkreis sowie ein Kraftwerk beschrieben, welche ein Turbinensystem der genannten Art aufweisen. Außerdem wird ein Betriebsverfahren für ein derartiges Turbinensystem beschrieben.

## Beschreibung

Die vorliegende Erfindung betrifft das technische Gebiet der Umwandlung von thermischer Energie insbesondere in elektrische Energie. Die vorliegende Erfindung betrifft insbesondere ein Turbinensystem für einen Sekundärkreislauf eines Kraftwerks. Die vorliegende Erfindung betrifft ferner einen Sekundärkreis für ein Kraftwerk mit einem derartigen Turbinensystem sowie ein Kraftwerk mit einem derartigen Sekundärkreislauf. Außerdem betrifft die vorliegende Erfindung ein entsprechendes Verfahren zum Betreiben eines Turbinensystems für einen Sekundärkreislauf eines Kraftwerks.

In Anbetracht zunehmender Knappheit von fossilen Brennstoffen hat die Bedeutung der Nutzung der Sonnenenergie zur Stromerzeugung in den jüngsten Jahren zunehmend an Bedeutung gewonnen. Dieser Bedeutungsgewinn wird sich sicherlich auch in Zukunft weiter fortsetzen.

Die Nutzung der Sonnenenergie zur Stromerzeugung kann auf zwei unterschiedlichen physikalischen Prinzipien beruhen. So kann beispielsweise durch Photovoltaik-Anlagen die von der Sonne ausgesandte elektromagnetische Strahlung direkt in elektrischen Strom umgewandelt werden. Ferner kann durch ein solarthermisches Kraftwerk durch die Energie der Sonne zunächst ein Wärmeträgermedium erhitzt werden, welches direkt oder indirekt eine Dampfturbine antreibt, die mechanisch mit einem elektrischen Generator gekoppelt ist.

Bekannte solarthermische Kraftwerke weisen typischerweise einen Primärkreis und einen Sekundärkreis auf. Der Primärkreis weist ein Solarfeld, eine Wärmetauschergruppe und eine Pumpe auf. Das Solarfeld dient der Erhitzung eines Wärmeträgermediums, welches mit der Pumpe in dem Primärkreis zirkuliert wird. Die Wärmetauschergruppe weist üblicherweise einen Vorwärmer, einen Verdampfer und einen Überhitzer zum Übertragen der Wärmeenergie von dem Wärmeträgermedium auf den Sekundärkreis des solarthermischen Kraftwerks auf. Optional kann der Primärkreis auch noch einen thermischen Speicher aufweisen. Der Sekundärkreis kann beispielsweise ein Wasserdampfkreislauf sein, in dem sich eine Dampfturbine mit nachgeschalteten Generator befindet.

Das Solarfeld kann Parabol-Rinnen-Kollektoren, Fresnel-Kollektoren und/oder einen Solar-Turm aufweisen. Für Parabol-Rinnen-Kollektoren wird als Wärmeträgermedium üblicherweise ein sog. Thermoöl verwendet. Für Fresnel-Kollektoren wird als Wärmeträgermedium üblicherweise Wasser und für einen Solar-turm wird als Wärmeträgermedium üblicherweise Salzschmelze (Molten Salt), Luft oder Wasser eingesetzt. Für die genannten Solarfeldtechnologien können jedoch auch andere Wärmeträgermedien verwendet werden.

Hat das verwendete Wärmeträgermedium einen hohen Schmelzpunkt besteht bei einem Teillastbetrieb des Kraftwerks beim Wärmetausch von dem Primärkreis auf den Sekundärkreis die Gefahr des Kristallisierens bzw. des Verfestigens des Wärmeträgermediums. Dies liegt unter anderem daran, dass sich bei einem Teillastbetrieb die Eintrittstemperatur eines Arbeitsmediums in die Wärmetauschergruppe zum Sekundärkreis verringert. Dadurch verändert sich typischerweise auch das Wärmeübertragungsverhalten und die Rücklauftemperatur des Wärmeträgermediums wird deutlich niedriger.

Um ein Verfestigen des Wärmeträgermediums und damit einen Ausfall eines solarthermischen Kraftwerks zu verhindern, wird bei der Konzeption des Primärkreislaufes ein entsprechend großer Sicherheitsabstand zur Kristallisationstemperatur des Wärmeträgermediums eingehalten. Dadurch kann auch bei einem Teillastbetrieb die Kristallisationstemperatur des Wärmeträgermediums nicht erreicht werden. Dies ermöglicht einen sicheren Betrieb während der ganzen Betriebszeit. Der Wirkungsgrad des Kraftwerks wird durch diese Sicherheitsmaßnahme jedoch reduziert.

Der Erfindung liegt die Aufgabe zugrunde, den Betrieb eines Kraftwerks dahingehend zu verbessern, dass sowohl eine hohe Betriebssicherheit als auch ein hoher Wirkungsgrad erreicht werden kann.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird ein Turbinensystem für einen Sekundärkreislauf eines Kraftwerks beschrieben. Das beschriebene Turbinensystem weist auf (a) eine Dampfturbine, welche mit einem Arbeitsmedium betreibbar ist und welche zumindest einen ersten Anzapf-Anschluss und einen zweiten Anzapf-Anschluss für das Arbeitsmedium aufweist, wobei die beiden Anzapf-Anschlüsse unterschiedlichen Energieniveaus des Arbeitsmediums zugeordnet sind, (b) ein Leitungssystem mit einer ersten Abgabeleitung zum Transferieren des Arbeitsmediums von dem ersten Anzapf-Anschluss zu einer Arbeitsmedium-Vorwärmvorrichtung und einer zweiten Abgabeleitung zum Transferieren des Arbeitsmediums von dem zweiten Anzapf-Anschluss zu der Arbeitsmedium-Vorwärmvorrichtung, und (c) eine Steuereinrichtung, mittels welcher abhängig von einer Rücklauftemperatur des Arbeitsmediums im Bereich der Arbeitsmedium-Vorwärmvorrichtung ein Transfer des Arbeitsmediums über die erste Abgabeleitung und/oder die zweite Abgabeleitung aktivierbar ist.

Dem beschriebenen Turbinensystem liegt die Erkenntnis zugrunde, dass durch die bedarfsweise Nutzung von verschiedenen Anzapf-Anschlüssen die Temperatur des Arbeitsmediums im Bereich einer Arbeitsmedium-Vorwärmvorrichtung auch dann in einem vorgegebenen Temperaturbereich gehalten werden kann, wenn das Kraftwerk lediglich in Teillast betrieben wird.

Mit dem beschriebenen Turbinensystem kann die Arbeitsmedium-Vorwärmvorrichtung, welche insbesondere der oberste Vorwärmer eines Kraftwerk-Sekundärkreises sein kann, immer mit dem gerade notwendigen Druckniveau versorgt werden. Die Arbeitsmedium-Vorwärmvorrichtung kann dabei auch mehrere einzelne Vorwärmer aufweisen, die bei Bedarf entsprechend zugeschaltet werden können.

Durch eine weitgehend gleich bleibende Endtemperatur des Arbeitsmediums, welche zumindest annähernd einer Auslegungstemperatur des Sekundärkreislaufs entspricht, kann der Sicherheitsabstand der Rücklauftemperatur eines Wärmeträgermediums eines Primärkreislaufs des Kraftwerks von der Kristallisationstemperatur des Wärmeträgermediums verringert werden. Bei einer geeigneten Aktivierung der beiden Abgabeleitungen kann sichergestellt werden, dass dieser Sicherheitsabstand auch bei einem Teillastbetrieb des Kraftwerks zumindest annähernd konstant gehalten wird und sich auf keinen Fall unter einen für den Betrieb des Kraftwerks kritischen Wert verringert.

Im Vergleich zu bekannten Kraftwerken kann somit ohne eine Einschränkung der Betriebssicherheit der Sicherheitsabstand zur Kristallisationstemperatur verringert und so der Wirkungsgrad des gesamten Kraftwerks verbessert werden. Dabei erweist sich der Vorteil eines Kraftwerks, welches einen Sekundärkreislauf mit dem erfindungsgemäßen Turbinensystem aufweist, besonders dann als groß, wenn das Kraftwerk mit unterschiedlichen Auslastungen betrieben wird. Stark unterschiedliche Auslastungen kommen insbesondere bei thermischen Solarkraftwerken vor, bei denen ein in einem Primärkreislauf befindliches Wärmeträgermedium durch Sonneneinstrahlung erwärmt wird, wobei zumindest ein Teil der Wärmeenergie des Wärmeträgermediums mittels eines Wärmetauschers an ein in einem Sekundärkreislauf befindliches Arbeitsmedium übergeben wird. In dem Sekundärkreislauf ist dabei das erfindungsmäße Turbinensystem angeordnet.

Unter dem Begriff "unterschiedliche Energieniveaus" sind in diesem Dokument insbesondere unterschiedliche Druckniveaus und/oder unterschiedliche Temperaturniveaus des in der Dampfturbine befindlichen und durch die Dampfturbine hindurch transportierten Arbeitsmediums zu verstehen. Üblicherweise ist bei einem typischen Expansionsvorgang des Arbeitsmediums in einer Dampfturbine einem höheren Druckniveau auch ein höheres Temperaturniveau zugeordnet.

Unter dem Begriff "aktivieren" ist in diesem Dokument insbesondere ein Einstellen eines Volumenstroms durch die erste und/oder zweite Abgabeleitung zu verstehen. Dies kann beispielsweise durch ein geeignetes Öffnen von einem oder mehreren Ventilen erfolgen, die in der jeweiligen Abgabeleitung angeordnet oder der jeweiligen Abgabeleitung vor- bzw. nachgeschaltet sind.

Es wird darauf hingewiesen, dass durch die beschriebene Möglichkeit der Aktivierung von verschiedenen Abgabeleitungen die "Schluckfähigkeit" des jeweiligen Anzapf-Anschlusses eingestellt werden kann. Dadurch kann auch das Druckniveau an dem jeweiligen Abzapf-Anschluss eingestellt werden. In diesem Zusammenhang wird darauf hingewiesen, dass eine Einstellung der Schluckfähigkeit alternativ oder in Kombination (d.h. zusätzlich zu der Aktivierung von einem Transfer von Arbeitsmedium) auch intern in der Turbine beispielsweise durch eine entsprechendes Zu- oder Aufdrehen von Turbinenschaufeln erfolgen kann.

Gemäß einem Ausführungsbeispiel der Erfindung weist die Dampfturbine zusätzlich zumindest einen weiteren Anzapf-Anschluss auf, wobei der weitere Anzapf-Anschluss im Vergleich zu dem ersten Anzapf-Anschluss und zu dem zweiten Anzapf-Anschluss einem unterschiedlichen Energieniveau des Arbeitsmediums zugeordnet ist. Ferner weist das Leitungssystem zusätzlich zumindest eine weitere Abgabeleitung auf, wobei das Arbeitsmedium mittels der weiteren Abgabeleitung von dem weiteren Anzapf-Anschluss zu der Arbeitsmedium-Vorwärmvorrichtung transferierbar ist.

Die Verwendung von mehreren Anzapf-Anschlüssen hat den Vorteil, dass die Energiemenge, die von der Dampfturbine ohne die Verrichtung von Arbeit beispielsweise zur Stromerzeugung zu der Arbeitsmedium-Vorwärmvorrichtung transferiert wird, besonders genau eingestellt werden kann. Dies hat zur Folge, dass auf vorteilhafte Weise eine besonders genaue Steuerung bzw. Regelung der Temperatur des Arbeitsmediums im Bereich der Arbeitsmedium-Vorwärmvorrichtung realisiert werden kann.

Die Anzapf-Anschlüsse der Dampfturbine können auch als sog. Wanderanzapfungen beschrieben werden. Dies soll verdeutlichen, dass verschiedene Anzapfstellen der Dampfturbine genutzt werden können, um die Arbeitsmedium-Vorwärmvorrichtung mit Dampf zu beaufschlagen und umso insbesondere bei einem Teillastbetrieb des Kraftwerks die Rücklauftemperatur des Sekundärkreislaufs weitgehend konstant zu halten und eine Kristallisation des Wärmeträgermediums des Primärkreislaufs des Kraftwerks zu verhindern.

Gemäß einem weiteren Ausführungsbeispiel der Erfindung weist die Dampfturbine einen Frischdampf-Anzapf-Anschluss auf, welcher einem Arbeitsraum der Dampfturbine vorgeschaltet ist. Ferner weist das Leitungssystem eine Frischdampf-Leitung auf, wobei das Arbeitsmedium mittels der Frischdampf-Leitung von dem Frischdampf-Anzapf-Anschluss zu der Arbeitsmedium-Vorwärmvorrichtung transferierbar ist.

Der Frischdampf-Anzapf-Anschluss kann über eine pneumatische Leitung mit dem Eingang der Dampfturbine gekoppelt sein. Im Vergleich zu den diversen Anzapf-Anschlüssen (erster Anzapf-Anschluss, zweiter Anzapf-Anschluss und ggf. weiterer Anzapf-Anschluss) der Dampfturbine, ist der Frischdampf-Anzapf-Anschluss dem höchsten Energieniveau des Arbeitsmediums zugeordnet. Dies bedeutet, dass derjenige Teil des Arbeitsmediums, welcher über den Frischdampf-Anzapf-Anschluss Übergeführt wird, in der Dampfturbine noch keinerlei Arbeit verrichtet hat und somit das höchste Druck und/oder Temperaturniveau des Sekundärkreises aufweist.

Gemäß einem weiteren Ausführungsbeispiel der Erfindung weist das Leitungssystem ferner eine Nebenschluss-Leitung auf, die sich zwischen der Frischdampf-Leitung und zumindest einer der Abgabeleitungen erstreckt, wobei mittels der Nebenschluss-Leitung Arbeitsmedium bei Bedarf zumindest teilweise zwischen der Frischdampf-Leitung und der jeweiligen Abgabeleitung transferierbar ist. Dies hat den Vorteil, dass das Arbeitsmedium innerhalb des Leitungssystems auf geeignete Weise vermischt werden kann. Dabei treffen dann verschiedene Teilmengen des Arbeitsmedium mit unterschiedlichen Energieniveaus aufeinander, so dass die Verteilung der Energie, die möglicherweise an verschiedenen Stellen der Arbeitsmedium-Vorwärmvorrichtung ankommt, abhängig von der aktuellen Last, mit dem das Kraftwerk betrieben wird, bestimmt werden kann.

Es wird darauf hingewiesen, dass das Leitungssystem auch mehrere Nebenschluss-Leitungen aufweisen kann, die eine weitere Abgabeleitung mit der Anzapfleitung, kommend von der der o.g. Frischdampf-Leitung, verbinden und somit einen weiteren Transfer von Arbeitsmedium ermöglichen.

Ferner wird darauf hingewiesen, dass das Arbeitsmedium auch nicht zwingend in einer Leitung bzw. einer Nebenschluss-Leitung geführt werden muss. Es ist vielmehr auch möglich, das Arbeitsmedium direkt von verschiedenen Anzapf-Anschlüssen, die unterschiedlichen Druckniveaus zugeordnet sind, an jeweils einen Eingang der Arbeitsmedium-Vorwärmvorrichtung zu transferieren.

Gemäß einem weiteren Ausführungsbeispiel der Erfindung weist das Leitungssystem ferner eine weitere Nebenschluss-Leitung auf, die sich zwischen der ersten Abgabeleitung und der zweiten Abgabeleitung erstreckt, wobei mittels der weiteren Nebenschlussleitung Arbeitsmedium bei Bedarf zumindest teilweise zwischen den beiden Abgabeleitungen transferierbar ist.

Auch die Bereitstellung der weiteren Nebenschluss-Leitung hat den Vorteil, dass das Arbeitsmedium innerhalb des Leitungssystems auf geeignete Weise vermischt werden und somit eine geeignete Energieverteilung des Arbeitsmediums in der Arbeitsmedium-Vorwärmvorrichtung eingestellt werden kann.

Gemäß einem weiteren Ausführungsbeispiel der Erfindung weist die Arbeitsmedium-Vorwärmvorrichtung eine erste Vorwärmeinrichtung und eine zweite Vorwärmeinrichtung auf. Ferner weist das Leitungssystem eine erste Übergabeleitung und eine zweite Übergabeleitung auf. Dabei ist mittels der ersten Übergabeleitung das Arbeitsmedium von dem Leitungssystem zu der ersten Vorwärmeinrichtung transferierbar ist und in entsprechender Weise ist mittels der zweiten Übergabeleitung das Arbeitsmedium von dem Leitungssystem zu der zweiten Vorwärmeinrichtung transferierbar. Dies hat den Vorteil, dass derjenige Teil des Arbeitsmediums, welcher entweder (a) vor der Dampfturbine über den Frischdampf-Anzapf-Anschluss angezapft wird und deshalb in der Turbine keine Arbeit geleistet hat oder (b) welcher in der Turbine angezapft wird und deshalb maximal lediglich einen Teil der möglichen Arbeit geleistet hat, unterschiedlichen Vorwärmeinrichtungen zugeführt werden kann. Dabei können die beiden unterschiedlichen Vorwärmeinrichtungen hinsichtlich des Energieniveaus des zugeführten Arbeitsmediums, insbesondere hinsichtlich des jeweiligen Arbeitsmedium-Druckniveaus und/oder hinsichtlich des Arbeitsmedium-Temperaturniveaus, optimiert sein.

Das Leitungssystem kann bevorzugt derart geschaltet sein, dass die erste Abgabeleitung bzw. der erste Anzapf-Anschluss und/oder die Frischdampf-Leitung bzw. der Frischdampf-Anzapf-Anschluss mit der ersten Übergabeleitung gekoppelt sind. Dabei wird davon ausgegangen, dass ein dem ersten Anzapf-Anschluss zugeordnetes erstes Arbeitsmedium-Energieniveau energetisch höher liegt als ein dem zweiten Anzapf-Anschluss zugeordnetes zweites Arbeitsmedium-Energieniveau. Dies bedeutet, dass der ersten Vorwärmeinrichtung ein Arbeitsmedium mit einem hohen Energieniveau zugeführt wird. In entsprechender Weise kann die zweite Übergabeleitung mit dem zweiten Anzapf-Anschluss gekoppelt werden, welcher dem niedrigeren Arbeitsmedium-Energieniveau zugeordnet ist. Dies bedeutet, dass der zweiten Vorwärmeinrichtung ein Arbeitsmedium mit einem vergleichsweise niedrigen Energieniveau zugeführt wird. Es wird jedoch darauf hingewiesen, dass dieses niedrige Energieniveau energetisch immer noch höher liegt als derjenige Teil des Arbeitsmediums, welches in der Dampfturbine Arbeit verrichtet hat und über eine gewöhnliche Rücklaufleitung des Sekundärkreislaufs mit demjenigen Arbeitsmedium zusammentrifft, welcher über das Leitungssystem in die Arbeitsmedium-Vorwärmvorrichtung transferiert wird.

Die Arbeitsmedium-Vorwärmvorrichtung kann beispielsweise ein sog. Rohrbündelwärmetauscher sein. Dies bedeutet, dass sich verschiedene Massenströme nicht direkt miteinander mischen und dass nur die Wärme übertragen wird.

Gemäß einem weiteren Ausführungsbeispiel der Erfindung weist das Leitungssystem zumindest ein Ventil auf, welches mittels der Steuereinrichtung aktivierbar ist, so dass der Volumenstrom an Arbeitsmedium, welcher durch das Ventil hindurchtritt, einstellbar ist.

Abhängig von der Anordnung des Ventils innerhalb des Leitungssystems können somit verschiedene Durchflussmengen an Arbeitsmedium eingestellt werden. Durch die Verwendung von mehreren an geeigneter Stelle angeordneten Ventilen kann die Verteilung der Arbeitsmedium-Volumenströme innerhalb des gesamten Leitungssystems weitgehend frei eingestellt und optimal an die aktuelle Auslastung bzw. die aktuelle Last des Kraftwerks angepasst werden. Dadurch kann zum einen die Effizienz des Kraftwerks optimiert und zum anderen auch die Betriebssicherheit des Kraftwerks verbessert werden.

Gemäß einem weiteren Ausführungsbeispiel der Erfindung ist das Arbeitsmedium Wasser. Dies hat den Vorteil, dass das beschriebene Turbinensystem mit dem wohl am meisten verbreiteten Arbeitsmedium betrieben werden kann. Damit ergibt sich für verschiedene Kraftwerkstypen die Möglichkeit, ohne aufwendige Umbaumaßnahmen das beschriebene Turbinensystem einzusetzen und den Wirkungsgrad und/oder die Betriebssicherheit des Kraftwerks zu erhöhen.

Es wird darauf hingewiesen, dass die vorliegende Erfindung jedoch keineswegs auf das Arbeitsmedium Wasser beschränkt ist. Die Erfindung kann auch in Verbindung mit anderen Arbeitsmedien wie beispielsweise Ammoniak oder ein Gemisch aus Ammoniak und Wasser realisiert werden. Es wird darauf hingewiesen, dass derzeit Wasser als das bevorzugte Arbeitsmedium angesehen wird. Ammoniak bzw. ein Ammoniak/Wasser-Gemisch kann jedoch bei einem Turbinensystem eingesetzt werden, welches bei sehr niedriger Temperatur arbeitet.

Gemäß einem weiteren Aspekt der Erfindung wird ein Sekundärkreis für ein Kraftwerk beschrieben. Der beschriebene Sekundärkreis weist auf (a) ein Wärmetauschersystem zum thermischen Koppeln des Sekundärkreises mit einem Primärkreis des Kraftwerks, und (b) ein Turbinensystem gemäß einem der oben aufgeführten Ausführungsbeispiele.

Auch dem beschriebenen Sekundärkreis liegt die Erkenntnis zugrunde, dass durch die bedarfsweise Nutzung von verschiedenen Anzapf-Anschlüssen die Temperatur des Arbeitsmediums im Bereich einer Arbeitsmedium-Vorwärmvorrichtung auch dann in einem vorgegebenen Temperaturbereich gehalten werden kann, wenn das Kraftwerk lediglich in Teillast betrieben wird.

Das Wärmetauschersystem kann verschiedenen Komponenten wie beispielsweise einen Vorwärmer, einen Verdampfer und/oder einen Überhitzer aufweisen.

Es wird darauf hingewiesen, dass der Sekundärkreis auch noch weitere Komponenten wie beispielsweise (a) eine Arbeitsmedium-Pumpe zum Zirkulieren des Arbeitsmediums in dem Sekundärkreis, (b) einen Arbeitsmedium-Vorratstank und/oder (c) einen der Dampfturbine nachgeschalteten Arbeitsmedium-Kondensator aufweisen kann. Diese Aufzählung ist jedoch als nicht abschließend anzusehen. Dem Fachmann können je nach Anwendungsfall auch noch weitere Komponenten zur Verbesserung der Effizienz und/oder der Betriebssicherheit des gesamten Kraftwerks geläufig sein.

Gemäß einem weiteren Aspekt der Erfindung wird ein Kraftwerk zum Erzeugen von Energie, insbesondere zum Erzeugen von elektrischer Energie, beschrieben. Das beschriebene Kraftwerk weist auf (a) einen Primärkreis, eingerichtet zum Aufnehmen von thermischer Energie und zum Übertragen der aufgenommenen thermischen Energie an ein Wärmeträgermedium, und (b) einen Sekundärkreis des oben beschriebenen Typs. Das Wärmetauschersystem ist eingerichtet thermische Energie von dem Wärmeträgermedium auf das Arbeitsmedium zu übertragen.

Auch dem beschriebenen Kraftwerk liegt die Erkenntnis zugrunde, dass durch die Verwendung des oben beschriebenen Turbinensystems die Effizienz und/oder die Betriebssicherheit des Kraftwerks erhöht werden kann. Bei dem Turbinensystem können verschiedene Anzapf-Anschlüsse aktiviert und so die Temperatur des Arbeitsmediums im Bereich der Arbeitsmedium-Vorwärmvorrichtung auch bei Teillast in einem vorgegebenen Temperaturbereich gehalten werden.

Das Kraftwerk kann jedes beliebige Kraftwerk sein, in dem Wärme in Energie, insbesondere in elektrische Energie umgewandelt wird. Aus welcher Energieressource die Wärme erzeugt wird, ist für die vorliegende Erfindung nicht von Bedeutung. So kann das Kraftwerk beispielsweise ein Atomkraftwerk oder ein Gas oder Kohlekraftwerk sein.

Gemäß einem weiteren Ausführungsbeispiel der Erfindung weist der Primärkreis einen Sonnenkollektor auf, welcher eingerichtet ist, das Wärmeträgermedium durch die Ausnutzung der von der Sonne bereitgestellten Energie zu erwärmen.

Der Sonnenkollektor kann insbesondere dazu verwendet werden, Sonnenstrahlen auf einen Receiver bzw. Absorber zu konzentrieren.

Der Sonnenkollektor kann beispielsweise sog. Parabol-Rinnen-Kollektoren, Fresnel-Kollektoren und/oder einen Solar-Turm aufweisen, welche in bekannter Weise eine hohe Effizienz für die Aufnahme der von der Sonne bereitgestellten Energie aufweisen.

Gemäß einem weiteren Aspekt der Erfindung wird ein Verfahren zum Betreiben eines Turbinensystems für einen Sekundärkreislauf eines Kraftwerks beschrieben. Das beschriebene Verfahren weist auf (a) ein Betreiben einer Dampfturbine, welche zumindest einen ersten Anzapf-Anschluss und einen zweiten Anzapf-Anschluss für das Arbeitsmedium aufweist, wobei die beiden Anzapf-Anschlüsse unterschiedlichen Energieniveaus eines Arbeitsmediums der Dampfturbine zugeordnet sind, (b) ein Transferieren von Arbeitsmedium von der Dampfturbine zu einer Arbeitsmedium-Vorwärmvorrichtung mittels eines Leitungssystems, welches eine dem ersten Anzapf-Anschluss zugeordnete erste Abgabeleitung und eine dem zweiten Anzapf-Anschluss zugeordnete zweite Abgabeleitung aufweist, und (c) ein Aktivieren eines Transfers des Arbeitsmediums über die erste Abgabeleitung und/oder über die zweite Abgabeleitung abhängig von einer Rücklauftemperatur des Arbeitsmediums im Bereich der Arbeitsmedium-Vorwärmvorrichtung.

Auch dem beschriebenen Verfahren liegt die Erkenntnis zugrunde, dass durch die bedarfsweise Nutzung von verschiedenen Anzapf-Anschlüssen die Temperatur des Arbeitsmediums im Bereich einer Arbeitsmedium-Vorwärmvorrichtung auch dann in einem vorgegebenen Temperaturbereich gehalten werden kann, wenn das Kraftwerk lediglich in Teillast betrieben wird.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.
Figur 1 zeigt ein Schaltbild für ein solarthermisches Kraftwerk, welches einen mit einem Wärmeträgermedium arbeitenden Primärkreis und einen mit einem Arbeitsmedium arbeitenden Sekundärkreis aufweist.
Figur 2 zeigt in einer vergrößerten schematischen Ansicht einen Teil eines Turbinensystems für den Sekundärkreislauf des in Figur 1 dargestellten Kraftwerks.

Es wird darauf hingewiesen, dass in unterschiedlichen Figuren dargestellte und einander entsprechende Komponenten mit Bezugszeichen versehen sind, welche sich lediglich in der ersten Ziffer unterscheiden. Zur Vermeidung von unnötigen Wiederholungen werden bereits erläuterte Komponenten an späterer Stelle nicht noch einmal im Detail erläutert.

Ferner wird darauf hingewiesen, dass die nachfolgend beschriebene Ausführungsform lediglich eine beschränkte Auswahl an möglichen Ausführungsvarianten der Erfindung darstellen.

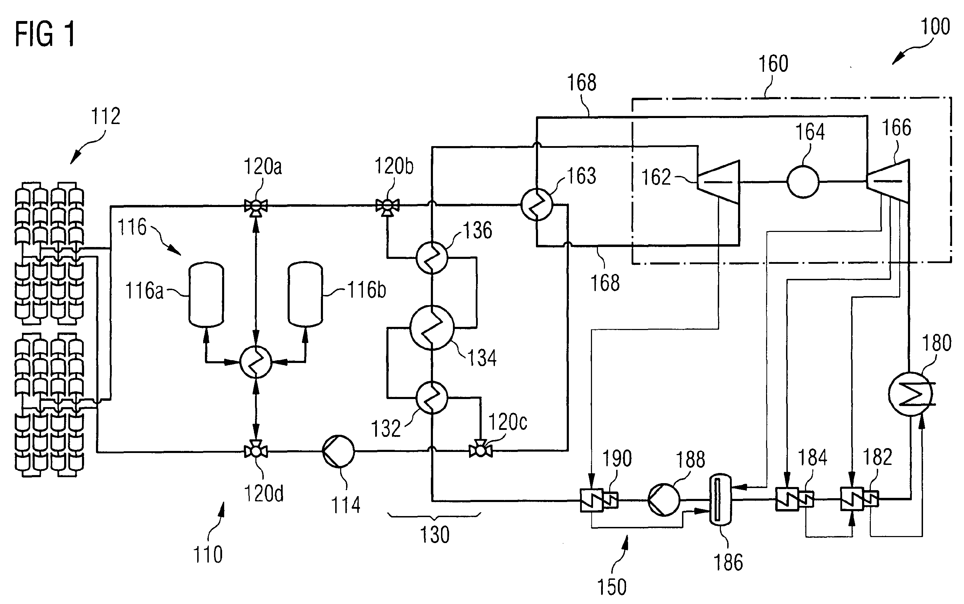

Figur 1 zeigt ein Schaltbild für ein solarthermisches Kraftwerk 100, welches einen mit einem Wärmeträgermedium arbeitenden Primärkreis 110 und einen mit einem Arbeitsmedium arbeitenden Sekundärkreis 150 aufweist. Der Primärkreis 110 und der Sekundärkreis 150 sind über eine Wärmetauschergruppe 130 thermisch miteinander gekoppelt. Wie aus Figur 1 ersichtlich, weist die Wärmetauschergruppe 130 drei Wärmetauscher, einen Vorwärmer 132, einen Verdampfer 134 und einen Überhitzer 136, auf. Es wird darauf hingewiesen, dass der dargestellte Aufbau der Wärmetauschergruppe 130 lediglich ein typisches Beispiel darstellt. Die Wärmetauschergruppe kann selbstverständlich auch auf andere Weise als hier konkret dargestellt realisiert werden.

Der Primärkreis 110 weist ein Solarfeld 112 auf, mit dem die elektromagnetische Strahlung der Sonne aufgenommen und als Wärme an das Wärmeträgermedium übergeben wird. Wie bereits oben erwähnt, kann das Solarfeld 112 Parabol-Rinnen-Kollektoren, Fresnel-Kollektoren und/oder einen Solar-Turm aufweisen, mit denen die Sonnenenergie auf effiziente Weise in den Primärkreis eingespeist werden kann.

Der Primärkreis 110 weist ferner eine Pumpe 114 auf, welche für eine geeignete Zirkulation des Wärmeträgermediums in den Leitungen des Primärkreises 110 sorgt. Gemäß dem hier dargestellten Ausführungsbeispiel ist ferner ein Speichersystem 116 vorgesehen, welches einen ersten Speichertank 116a und einen zweiten Speichertank 116b aufweist. Mittels eines Wärmetauschers 118 und zwei Drei-Wege Ventilen 120a und 120d kann dem Speichersystem 116 eine bestimmen Menge an Wärmeträgermedium zugeführt bzw. abgeführt werden. Ferner sind zwei Drei-Wege-Ventile 120b und 120c vorgesehen, mit denen der Volumenstrom des Wärmeträgermediums zwischen der Wärmetauschergruppe 130 und einer über einen Wärmetauscher 163 verlaufenden Teilstrom-Leitung verteilt werden kann.

Es wird darauf hingewiesen, dass der Wärmetauscher 118 dann erforderlich ist, wenn das Medium in den Speichertanks 116a, 116b nicht gleich dem Arbeitsmedium in dem Solarfeld 112 ist. So kann das Arbeitsmedium des Solarfeldes 112 beispielsweise Öl sein, wohingegen das Medium in den Speichertanks 116a, 116b Salz ist. Damit kann dann Wärme an die Speicher 116a, 116b bzw. von den Speichern 116a, 116b übertragen werden. Im Falle der Verwendung von Salz als Arbeitsmedium für das Solarfeld 112 wäre der Wärmetauscher 118 dann nicht unbedingt erforderlich.

Der Sekundärkreis 150 des Kraftwerks 100 weist ein Turbinensystem 160 auf. Gemäß dem hier dargestellten Ausführungsbeispiel umfasst das Turbinensystem 160 eine Hochdruck-Dampfturbine 162, einen Generator 164 und eine Niederdruck-Dampfturbine 166. Über eine Leitung 168 wird das aus der Hochdruck-Dampfturbine 162 austretende Arbeitsmedium über den bereits zuvor erwähnten Wärmetauscher der Niederdruck-Dampfturbine 166 zugeführt. Gemäß dem hier dargestellten Ausführungsbeispiel ist das Arbeitsmedium Wasser bzw. Wasserdampf. Das Arbeitsmedium Wasser wird in diesem Dokument auch als Speisewasser bezeichnet.

Dem Turbinensystem 160 nachgeschaltet ist ein Kondensator 180, in dem der aus der Niederdruck-Dampfturbine 166 austretende Wasserdampf kondensiert wird. Dem Kondensator 180 nachgeschaltet sind zwei Mischeinheiten 182 und 184, in denen von der Niederdruck-Dampfturbine 166 abgezapfter Wasserdampf über verschiedene Verbindungsleitungen mit dem kondensierten Wasserdampf (nunmehr Wasser) vermischt wird. Ferner weist auch der Sekundärkreis 150 einen Speicherbehälter 186 auf. In Verbindung mit dem Arbeitsmedium Wasser wird dieser auch als Speisewassertank 186 bezeichnet.

Ein Pumpe 188 sorgt für eine Zirkulation des Wasserdampfes bzw. des kondensierten Wassers in dem Sekundkreis. Der Pumpe 188 nachgeschaltet ist eine Arbeitsmedium-Vorwärmvorrichtung 190, in der von der Hochdruck-Dampfturbine 162 abgezapfter Wasserdampf mit dem von der Pumpe 188 geförderten Wasser vermischt wird und so die Speisewasser-Endtemperatur angehoben wird, bevor das Speisewasser bzw. das Wasser in die Wärmetauschergruppe 130 tritt.

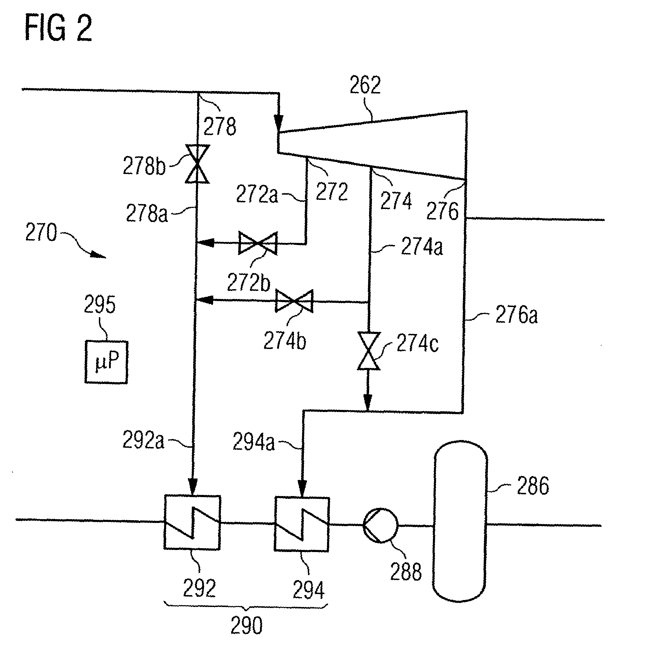

Figur 2 zeigt in einer vergrößerten schematischen Ansicht einen Teil des in Figur 1 dargestellten Turbinensystems 160.

Zwischen der Hochdruck-Dampfturbine, die nun mit dem Bezugszeichen 262 versehen ist, und der Arbeitsmedium-Vorwärmvorrichtung, welche in Figur 2 mit dem Bezugszeichen 290 versehen ist, erstreckt sich ein Leitungssystem 270. Mittels des Leitungssystems 270 kann an verschiedenen Stellen der Hochdruck-Dampfturbine 262 entnommener bzw. abgezapfter Dampf unter Umgehung der Niederdruck-Dampfturbine 166 der Arbeitsmedium-Vorwärmvorrichtung 290 zugeführt werden.

Es wird darauf hingewiesen, dass eine Aufteilung des Turbinensystems in zwei oder drei Teilturbinen nicht zwingend erforderlich ist. Insbesondere bei einem Turbinensystem, welches lediglich für eine kleinere Leistung ausgelegt ist, kann ein Turbinensystem auch mit lediglich einer Turbine in einem eigenen Turbinengehäuse verwendet werden.

Die Hochdruck-Dampfturbine 262 weist mehrere Anzapf-Anschlüsse auf. Ein erster Anzapf-Anschluss 272 ist einem ersten Energieniveau des in der Hochdruck-Dampfturbine 262 Arbeit verrichtenden Arbeitsmediums zugeordnet. Über eine erste Abgabeleitung 272a kann das von dem ersten Anzapf-Anschluss 272 entnommene Arbeitsmedium dem Leitungssystem 270 und später der Arbeitsmedium-Vorwärmvorrichtung 290 zugeführt werden. Mittels eines Ventils 272b, welche in nicht dargestellter Weise mit einer Steuereinrichtung 295 gekoppelt ist, kann der Volumenstrom des von dem ersten Anzapf-Anschluss 272 entnommenen Arbeitsmediums eingestellt werden.

Ein zweiter Anzapf-Anschluss 274 der Turbine 262 ist einem zweiten Energieniveau des in der Hochdruck-Dampfturbine 262 Arbeit verrichtenden Arbeitsmediums zugeordnet. Das zweite Energieniveau ist energetisch niedriger als das erste Energieniveau. Über eine zweite Abgabeleitung 274a kann das von dem zweiten Anzapf-Anschluss 274 entnommene Arbeitsmedium dem Leitungssystem 270 und später der Arbeitsmedium-Vorwärmvorrichtung 290 zugeführt werden. Mittels eines Ventils 274c, welche ebenfalls mit der Steuereinrichtung 295 gekoppelt ist, kann der Volumenstrom des von dem zweiten Anzapf-Anschluss 274 entnommenen Arbeitsmediums eingestellt werden.

Außerdem ist ein dritter Anzapf-Anschluss 276 der Turbine 262 einem dritten Energieniveau des in der Hochdruck-Dampfturbine 262 Arbeit verrichtenden Arbeitsmediums zugeordnet. Das dritte Energieniveau ist energetisch niedriger als das zweite Energieniveau. Über eine dritte Abgabeleitung 276a kann das von dem dritten Anzapf-Anschluss 276 entnommene Arbeitsmedium dem Leitungssystem 270 und später der Arbeitsmedium-Vorwärmvorrichtung 290 zugeführt werden.

Wie aus Figur 2 ersichtlich, ist der Turbine 262 ferner ein Frischdampf-Anzapf-Anschluss 278 vorgeschaltet. Über eine Frischdampf-Leitung 278a, in der sich ein Ventil 278b befindet, kann Frischdampf unter Umgehung sowohl der HochdruckTurbine 262 als auch der in Figur 1 dargestellten Niederdruck-Turbine 166 der Arbeitsmedium-Vorwärmvorrichtung 290 zugeführt werden. Auch das Ventil 278b, welches ebenfalls der Steuerung bzw. der Regelung eines durch die Frischdampf-Leitung 278a transferierten Frischdampfes dient, ist in nicht dargestellter Weise mit der Steuereinrichtung 295 gekoppelt.

Wie aus Figur 2 ersichtlich, weist das Leitungssystem 270 ferner eine Nebenschluss-Leitung 275 mit einem Ventil 274b auf, welche die zweite Abgabeleitung 274a mit der Frischdampf-Leitung 278a verbindet. Auch hier dient das ebenfalls mit der Steuereinrichtung 295 gekoppelte Ventil 274b der Steuerung bzw. der Regelung des durch die Nebenschluss-Leitung 275 transferierten Volumenstroms des Arbeitsmediums.

Wie ferner aus Figur 2 ersichtlich, weist die Arbeitsmedium-Vorwärmvorrichtung 290 eine erste Vorwärmeinrichtung 292 und eine zweite Vorwärmeinrichtung 294 auf. Die erste Vorwärmeinrichtung 292 ist über eine erste Übergabeleitung 292a des Leitungssystems 270 mit den verschiedenen Anzapf-Anschlüssen der Turbine 262 bzw. dem Frischdampf-Anzapf-Anschluss 278 verbunden. Die zweite Vorwärmeinrichtung 294 ist über eine zweite Übergabeleitung 294a des Leitungssystems 270 mit den verschiedenen Anzapf-Anschlüssen der Turbine 262 bzw. dem Frischdampf-Anzapf-Anschluss 278 verbunden. Durch eine geeignete Ansteuerung der Ventile 278b, 272b, 274b und 274c kann die Verteilung der Energie, die durch das an den verschiedenen Stellen abgezapfte Arbeitsmedium an den beiden Vorwärmeinrichtungen 292 und 294 ankommt, abhängig von der aktuellen Last, mit dem das Kraftwerk betrieben wird, bestimmt werden.

Der Vollständigkeit halber sein noch erwähnt, dass der in Figur 1 dargestellte Speicherbehälter 186 in Figur 2 mit dem Bezugszeichen 286 versehen ist. Außerdem ist die in Figur 1 dargestellte Pumpe 188 in Figur 2 mit dem Bezugszeichen 288 versehen.

Nachfolgend wird eine bevorzugte Betriebsweise der lastabhängigen Arbeitsmittel-Anzapfung erläutert.

Die beiden Vorwärmeinrichtung 292 und 294 werden in dem hier exemplarisch beschriebenen Auslegungsfall mit Arbeitsmedium versorgt, welches über die Nebenschluss-Leitung 275 und die dritte Abgabeleitung 276a transferiert wird. Dadurch wird in den Vorwärmeinrichtungen 292 und 294 eine vorgegebene Nennvorwärmendtemperatur erreicht.

Reicht das Druckniveau der entsprechenden Anzapfungen 274 und 276 in Teillast nicht mehr aus, um eine ausreichend hohe Vorwärmendtemperatur in den beiden Vorwärmeinrichtungen 292 und 294 bzw. der Arbeitsmedium-Vorwärmvorrichtung 290 zu erreichen, dann wird die Versorgung des Speisewasservorwärmers durch die Anzapfung 274 durch die Anzapfung 272 ersetzt, welche auf einem höheren Druckniveau liegt.

Bei Bedarf kann auch noch die Anzapfung 276 auf die Anzapfung 274 umgeschalten werden. Dies bedeutet, dass zumindest ein erheblicher Teil des durch das Leitungssystem 270 transferierten Arbeitsmediums durch das Ventil 274c strömt.

Bei sehr kleinen Lasten kann eventuell der Speisewasservorwärmer 290 anstelle von der Anzapfung 272 mit Frischdampf aus dem Frischdampf-Anzapf-Anschluss 278 versorgt werden.

Es wird darauf hingewiesen, dass ein Arbeitsmittel-Transfer durch das Leitungssystem 270 auch noch durch andere Verschaltungsvarianten möglich ist, welche durch eine geeignete Ansteuerung der Ventile 278b, 272b, 274b und 274c erreicht werden kann.

## Patentansprüche

1. Turbinensystem für einen Sekundärkreislauf (150) eines Kraftwerks (100), das Turbinensystem (160) aufweisend
• eine Dampfturbine (162, 262), welche mit einem Arbeitsmedium betreibbar ist und welche zumindest einen ersten Anzapf-Anschluss (272) und einen zweiten Anzapf-Anschluss (273) für das Arbeitsmedium aufweist, wobei die beiden Anzapf-Anschlüsse (272, 274) unterschiedlichen Energieniveaus des Arbeitsmediums zugeordnet sind,
• ein Leitungssystem (270) mit
- einer ersten Abgabeleitung (272a) zum Transferieren des Arbeitsmediums von dem ersten Anzapf-Anschluss (272) zu einer Arbeitsmedium-Vorwärmvorrichtung (190, 290) und
- einer zweiten Abgabeleitung (272a) zum Transferieren des Arbeitsmediums von dem zweiten Anzapf-Anschluss (274) zu der Arbeitsmedium-Vorwärmvorrichtung (190, 290), und
• eine Steuereinrichtung (295), mittels welcher abhängig von einer Rücklauftemperatur des Arbeitsmediums im Bereich der Arbeitsmedium-Vorwärmvorrichtung (190, 290) ein Transfer des Arbeitsmediums über die erste Abgabeleitung (272a) und/oder die zweite Abgabeleitung (274a) aktivierbar ist.

2. Turbinensystem nach dem vorangehenden Anspruch,
- bei dem die Dampfturbine (162, 262) zusätzlich zumindest einen weiteren Anzapf-Anschluss (276) aufweist, wobei der weitere Anzapf-Anschluss (276) im Vergleich zu dem ersten Anzapf-Anschluss (272) und zu dem zweiten Anzapf-Anschluss (274) einem unterschiedlichen Energieniveau des Arbeitsmediums zugeordnet ist, und
- bei dem das Leitungssystem (270) zusätzlich zumindest eine weitere Abgabeleitung (276a) aufweist, wobei das Arbeitsmedium mittels der weiteren Abgabeleitung (276a) von dem weiteren Anzapf-Anschluss (276) zu der Arbeitsmedium-Vorwärmvorrichtung (190, 290) transferierbar ist.

3. Turbinensystem nach einem der vorangehenden Ansprüche,
- bei dem die Dampfturbine (162, 262) einen Frischdampf-Anzapf-Anschluss (278) aufweist, welcher einem Arbeitsraum der Dampfturbine (162, 262) vorgeschaltet ist, und
- bei dem das Leitungssystem (270) eine Frischdampf-Leitung (278a) aufweist, wobei das Arbeitsmedium mittels der Frischdampf-Leitung (278a) von dem Frischdampf-Anzapf-Anschluss (278) zu der Arbeitsmedium-Vorwärmvorrichtung (190, 290) transferierbar ist.

4. Turbinensystem nach dem vorangehenden Anspruch, bei dem
- das Leitungssystem (270) ferner eine Nebenschluss-Leitung (275) aufweist, die sich zwischen der Frischdampf-Leitung (278a) und zumindest einer der Abgabeleitungen (274a) erstreckt, wobei mittels der Nebenschluss-Leitung (275) Arbeitsmedium bei Bedarf zumindest teilweise zwischen der Frischdampf-Leitung (278a) und der jeweiligen Abgabeleitung (274a) transferierbar ist.

5. Turbinensystem nach einem der vorangehenden Ansprüche, bei dem
- das Leitungssystem (270) ferner eine weitere Nebenschluss-Leitung aufweist, die sich zwischen der ersten Abgabeleitung (272a) und der zweiten Abgabeleitung (274a) erstreckt, wobei mittels der weiteren Nebenschlussleitung Arbeitsmedium bei Bedarf zumindest teilweise zwischen den beiden Abgabeleitungen (272a, 274a) transferierbar ist.

6. Turbinensystem nach einem der vorangehenden Ansprüche,
- bei dem die Arbeitsmedium-Vorwärmvorrichtung (190, 290) eine erste Vorwärmeinrichtung (292) und eine zweite Vorwärmeinrichtung (294) aufweist und
- bei dem das Leitungssystem (270) eine erste Übergabeleitung (292a) und eine zweite Übergabeleitung (294a) aufweist, wobei mittels der ersten Übergabeleitung (292a) das Arbeitsmedium von dem Leitungssystem (270) zu der ersten Vorwärmeinrichtung (292) transferierbar ist und
wobei mittels der zweiten Übergabeleitung (294a) das Arbeitsmedium von dem Leitungssystem (270) zu der zweiten Vorwärmeinrichtung (294) transferierbar ist.

7. Turbinensystem nach einem der vorangehenden Ansprüche, bei dem
- das Leitungssystem (270) zumindest ein Ventil (278b, 272b, 274b, 274c) aufweist, welches mittels der Steuereinrichtung (295) aktivierbar ist, so dass der Volumenstrom an Arbeitsmedium, welcher durch das Ventil (278b, 272b, 274b, 274c) hindurchtritt, einstellbar ist.

8. Turbinensystem nach einem der vorangehenden Ansprüche, bei dem
das Arbeitsmedium Wasser ist.

9. Sekundärkreis für ein Kraftwerk (100), der Sekundärkreis (150) aufweisend
• ein Wärmetauschersystem (130) zum thermischen Koppeln des Sekundärkreises (150) mit einem Primärkreis (110) des Kraftwerks (100), und
• ein Turbinensystem (160) nach einem der vorangehenden Ansprüche.

10. Kraftwerk zum Erzeugen von Energie, insbesondere zum Erzeugen von elektrischer Energie, das Kraftwerk (100) aufweisend
• einen Primärkreis (110), eingerichtet zum Aufnehmen von thermischer Energie und zum Übertragen der aufgenommenen thermischen Energie an ein Wärmeträgermedium, und
• einen Sekundärkreis (150) nach dem vorangehenden Anspruch, wobei das Wärmetauschersystem (130) eingerichtet ist, thermische Energie von dem Wärmeträgermedium auf das Arbeitsmedium zu übertragen.

11. Kraftwerk nach dem vorangehenden Anspruch, wobei der Primärkreis (110) einen Sonnenkollektor (112) aufweist, welcher eingerichtet ist, das Wärmeträgermedium durch die Ausnutzung der von der Sonne bereitgestellten Energie zu erwärmen.

12. Verfahren zum Betreiben eines Turbinensystems (160) für einen Sekundärkreislauf eines Kraftwerks, das Verfahren aufweisend
• Betreiben einer Dampfturbine (162, 164, 166, 262), welche zumindest einen ersten Anzapf-Anschluss (272) und einen zweiten Anzapf-Anschluss (274) für das Arbeitsmedium aufweist, wobei die beiden Anzapf-Anschlüsse (272, 274) unterschiedlichen Energieniveaus eines Arbeitsmediums der Dampfturbine (162, 164, 166, 262) zugeordnet sind,
• Transferieren von Arbeitsmedium von der Dampfturbine (162, 164, 166, 262) zu einer Arbeitsmedium-Vorwärmvorrichtung (190, 290) mittels eines Leitungssystems (270), welches
- eine dem ersten Anzapf-Anschluss (272) zugeordnete erste Abgabeleitung (272a) und
- eine dem zweiten Anzapf-Anschluss (274) zugeordnete zweite Abgabeleitung (274a) aufweist, und
• Aktivieren eines Transfers des Arbeitsmediums über die erste Abgabeleitung (272a) und/oder über die zweite Abgabeleitung (274a) abhängig von einer Rücklauftemperatur des Arbeitsmediums im Bereich der Arbeitsmedium-Vorwärmvorrichtung (190, 290).
